# EUROPÄISCHE PATENTANMELDUNG

(11) **EP 4 618 038 A1**
(43) Veröffentlichungstag der Anmeldung: **17.09.2025**
(21) Anmeldenummer: 25159551.8
(22) Anmeldetag: 24.02.2025
(51) Int. Cl.: G06V 10/774, G06V 10/82, G06V 20/52

(54) **VERFAHREN ZUM ERZEUGEN EINES TRAININGSDATENSATZES**

(30) Priorität: 11.03.2024 DE 102024202246
(71) Anmelder: Robert Bosch GmbH, 70442 Stuttgart (DE)
(72) Erfinder: Troeltzsch, Uwe, 51503 Roesrath (DE); Steuler, Jan Linus, 61200 Woelfersheim (DE); Koelsch, Andreas, 86971 Peiting (DE); Sgarz, Heiko, 71229 Leonberg (DE); Law, Kakit, 72760 Reutlingen (DE); Giliard, Anke, 70180 Stuttgart (DE); Frischen, Andreas, 71229 Leonberg (DE); Dekel, Tal, 522590 Ramat Gan (IL); Fiederer, Lukas, 72336 Balingen (DE); Moster, Benjamin, 75223 Niefern-Oeschelbronn (DE)

(57) **Zusammenfassung**

Die Erfindung betrifft ein Computerimplementiertes Verfahren (300) zum Erzeugen eines Trainingsdatensatzes (143) für ein Training einer künstlichen Intelligenz (125) zum Betreiben eines Messgeräts (100), insbesondere eines Wanddiagnosegeräts, umfassend:
Empfangen (301) von Sensordaten (173) wenigstens einer Sensoreinheit (101) eines Messgeräts (100) durch ein Klassifikatormodul (183);
Generieren (303) von Latentraum-Repräsentationen (189) der Sensordaten (103) in einem Latentraum (195) durch das Klassifikatormodul (183);
Ermitteln (305) von Abständen (D) zwischen den Latentraum-Repräsentationen (189) im Latentraum (195) durch ein Abstandsermittlungsmodul (193);
Klassifizieren (307) der Sensordaten in Bezug auf den Wandtyp (123) der Wand (105) und/oder die Objektposition (115) und/oder den Objekttyp (117) des Objekts (113) basierend auf den Abständen (D) der Latentraum-Repräsentationen (189) der Sensordaten (173) im Latentraum (195) durch ein Klassifizierungsmodul; und
Zusammenfassen (309) der klassifizierten Sensordaten (173) in einem Trainingsdatensatz (143).

## Beschreibung

Die vorliegende Erfindung betrifft ein Verfahren zum Erzeugen eines Trainingsdatensatzes für ein Training einer künstlichen Intelligenz für ein Wanddiagnosegerät.

### Stand der Technik

Aus dem Stand der Technik sind Diagnosegeräte zum Diagnostizieren von Wänden und zum Detektieren von in den Wänden ausgebildeten Objekten bekannt.

Es ist eine Aufgabe der vorliegenden Erfindung, ein verbessertes Verfahren zum Erzeugen eines Trainingsdatensatzes für ein Training einer künstlichen Intelligenz eines Wanddiagnosegeräts bereitzustellen.

Die Aufgabe wird durch das Verfahren des Anspruchs 1 gelöst. Vorteilhafte Ausführungsformen sind Gegenstand der abhängigen Ansprüche.

Nach einem Aspekt wird ein Computerimplementiertes Verfahren zum Erzeugen eines Trainingsdatensatzes für ein Training einer künstlichen Intelligenz zum Betreiben eines Messgeräts, insbesondere eines Wanddiagnosegeräts, bereitgestellt, wobei das Verfahren umfasst:
Empfangen von Sensordaten wenigstens einer Sensoreinheit eines Messgeräts durch ein Klassifikatormodul, wobei die Sensordaten eine zu diagnostizierende Wand mit einem Wandtyp abbilden, und wobei in der Wand in einer Objektposition ein Objekt eines Objekttyps angeordnet ist;
Generieren von Latentraum-Repräsentationen der Sensordaten in einem Latentraum durch das Klassifikatormodul, wobei die Latentraum-Repräsentationen der Sensordaten als dimensionsreduzierte Darstellungen der Sensordaten ausgebildet sind;
Ermitteln von Abständen zwischen den Latentraum-Repräsentationen im Latentraum durch ein Abstandsermittlungsmodul;
Klassifizieren der Sensordaten in Bezug auf den Wandtyp der Wand und/oder die Objektposition und/oder den Objekttyp des Objekts basierend auf den Abständen der Latentraum-Repräsentationen der Sensordaten im Latentraum durch ein Klassifizierungsmodul, wobei die Sensordaten einer gemeinsamen Klasse zugeordnet klassifiziert werden, falls die Abstände der jeweiligen Latentraum-Repräsentationen im Latentraum zueinander kleiner oder gleich einem vordefinierten Grenzwert sind; und
Zusammenfassen der klassifizierten Sensordaten in einem Trainingsdatensatz.

Hierdurch kann der technische Vorteil erreicht werden, dass ein verbessertes Verfahren zum Erzeugen eines Trainingsdatensatzes für ein Training einer künstlichen Intelligenz zum Betreiben eines Messgeräts, insbesondere eines Wanddiagnosegerät bereitgestellt werden kann. Hierzu werden zunächst Sensordaten wenigstens einer Sensoreinheit des Messgeräts durch ein Klassifikatormodul empfangen. Die Sensordaten bilden hierbei die zu diagnostizierende Wand mit einem Wandtyp und gegebenenfalls in der Wand angeordnete Objekte ab. Basierend auf den Sensordaten werden durch das Klassifikatormodul Latentraum-Repräsentationen der Sensordaten generiert. Die Latentraum-Repräsentationen stellen hierbei eine dimensionsreduzierte Darstellung der Sensordaten dar. Die Latentraum-Repräsentationen stellen somit eine Codierung der Sensordaten dar und können in Vektorform gegeben sein.

Ferner werden zwischen den Latentraum-Repräsentationen durch ein Abstandsermittlungsmodul Abstände im Latentraum ermittelt. Basierend auf den ermittelten Abständen zwischen den Latentraum-Repräsentationen innerhalb des Latentraums werden die Sensordaten durch das Klassifizierungsmodul in Bezug auf den Wandtyp der zu diagnostizierenden Wand und/oder die Objektposition und/oder den Objekttyp eines in der Wand angeordneten Objekts klassifiziert.

Die Klassifizierung erfolgt hierbei derart, dass einer Latentraum-Repräsentation eine erste Klassifikation zugewiesen wird, falls die Latentraum-Repräsentation im Latentraum einen Abstand zu einer Gruppe weiterer Latentraum-Repräsentationen, denen bereits die ersten Klassifikation zugewiesen ist, kleiner oder gleich einen vorbestimmten Abstand ist. Über die Abstandsbestimmung der Latentraum-Repräsentationen im Latentraum kann somit eine präzise Klassifikation der durch die Latentraum-Repräsentationen dargestellten Sensordaten in Bezug auf den Wandtyp der dargestellten Wand bzw. die Objektposition und/oder den Objekttyp der Objekte bewirkt werden.

Über die Abstandsbestimmung der Latentraum-Repräsentationen kann somit eine einfache und zuverlässige automatische Klassifizierung der Sensordaten bezüglich der Klassifizierungsmerkmale erreicht werden. Abschließend werden die entsprechend klassifizierten Sensordaten in einem Trainingsdatensatz zusammengefasst. Eine umständlich händisch ausgeführte Klassifizierung der um klassifizierten Sensordaten kann somit vermieden werden.

Klassifizierte Sensordaten sind im Sinne der Anmeldung Sensordaten, für die eine entsprechende Klassifizierung bezüglich eines Klassifizierungsmerkmals bekannt ist. Das Klassifizierungsmerkmal kann beispielsweise ein Wandtyp der Wand und/oder eine Objektposition und/oder ein Objekttyp des Objekts sein. Für klassifizierte Sensordaten sind somit der Wandtyp der durch die Sensordaten abgebildeten Wand und/oder die Objektposition und/oder der Objekttyp des durch die Sensordaten abgebildeten Objekts bekannt. Die Klassifizierung ist hierbei eine Kennzeichnung der Sensordaten in Bezug auf das Klassifizierungsmerkmal. Über die Klassifizierung sind die Sensordaten gekennzeichnet, welchen Wandtyp die durch die Sensordaten abgebildete Wand aufweist, bzw. welche Objektposition und/oder welchen Objekttyp die durch die Sensordaten abgebildeten Objekte aufweisen.

Die unklassifizierten Sensordaten können hierbei aus einer Mehrzahl von Messungen einer Mehrzahl von Messgeräten stammen, wobei die Messungen an einer Mehrzahl verschiedener Wände unterschiedlichen Wandtyps mit unterschiedlichen Objekten ausgeführt wurden. Die Messungen können primär zu Erzeugen von Sensordaten für den Trainingsdatensatz oder während der Verwendung der Messgeräte durch Nutzer/Nutzerinnen ausgeführt worden sein.

Nach einer Ausführungsform umfasst das Verfahren ferner:
Entfernern oder Nichtberücksichtigen von Sensordaten aus dem oder für den Trainingsdatensatz, falls die Abstände der jeweiligen Latentraum-Repräsentationen zu den Latentraum-Repräsentationen der weiteren Sensordaten des Trainingsdatensatzes im Latentraum größer oder gleich einem vordefinierten zweiten Grenzwert sind.

Hierdurch kann der technische Vorteil erreicht werden, dass basierend auf den Abständen der Latentraum-Repräsentationen Sensordaten aus dem Trainingsdatensatz entfernt werden bzw. für den Trainingsdatensatz unberücksichtigt bleiben können, die über die Abstandsbestimmung keiner Objektklasse zugeordnet werden können. Sind die Abstände von Latentraum-Repräsentationen zu bereits klassifizierten Latentraum-Repräsentationen im Latentraum größer oder gleich einem vordefinierten zweiten Grenzwert, so können die durch die jeweiligen Latentraum-Repräsentationen repräsentierten Sensordaten keiner der Klassifizierungen der bereits klassifizierten Sensordaten zugeordnet werden. Derartig nicht klassifizierbare Sensordaten können beispielsweise auf Fehlmessungen basieren und fehlerhafte Sensordaten darstellen. Indem derartige Sensordaten für den Trainingsdatensatz nicht berücksichtigt werden bzw. aus diesem entfernt werden, kann die Qualität des resultierenden Trainingsdatensatzes erhöht werden.

Nach einer Ausführungsform umfasst das Verfahren ferner:
Generieren von generierten Sensordaten für den Trainingsdatensatz durch das Klassifikatormodul, wobei das Generieren umfasst:
Generieren von Latentraum-Repräsentationen mit vordefinierten Abständen zu vorausgewählten Latentraum-Repräsentationen im Latentraum durch das Klassifikatormodul, wobei die vorausgewählten Latentraum-Repräsentationen Sensordaten einer vorausgewählten Klassifikation darstellen; und
Generieren der durch die generierten Latentraum-Repräsentationen dargestellten Sensordaten durch das Klassifikatormodul, wobei die generierten Sensordaten die vorausgewählte Klassifikation aufweisen; und
Hinzufügen der generierten Sensordaten zum Trainingsdatensatz.

Hierdurch kann der technische Vorteil erreicht werden, dass durch das Klassifikatormodul Sensordaten für den Trainingsdatensatz generiert werden können. Hierdurch können umständliche Messungen zum Aufnehmen von Sensordaten für den Trainingsdatensatz vermieden werden.

Stattdessen kann einfach durch Ausführen des Klassifikatormoduls entsprechende Sensordaten generiert werden, die nicht auf tatsächlichen Messungen der Sensoreinheiten des Messgeräts basieren. Hierzu werden durch das Klassifikatormodul zunächst Latentraum-Repräsentationen mit vordefinierten Abständen zu vorausgewählten Latentraum-Repräsentationen im Latentraum generiert. Die Latentraum-Repräsentationen sind, wie oben beschrieben, in Vektordarstellungen dargestellt, die in ihrer Dimensionalität zu den tatsächlichen Sensordaten reduziert sind und eine Codierung der Information der Sensordaten darstellen.

Durch das Generieren entsprechender Vektordarstellungen bzw. Latentraum-Repräsentationen im Latentraum können entsprechende Sensordaten repräsentiert werden, die tatsächlich nicht zuvor durch Messungen aufgenommen wurden. Indem die Latentraum-Repräsentationen mit vordefinierten Abständen zu vorausgewählten Latentraum-Repräsentationen generiert werden, kann erreicht werden, dass die neu generierten Latentraum-Repräsentation die vorausgewählten Klassifikationen der vorausgewählten Latentraum-Repräsentationen aufweisen. Hierdurch kann erreicht werden, dass die durch die generierten Latentraum-Repräsentationen dargestellten Sensordaten ebenfalls die vorausgewählten Klassifikationen aufweisen.

Auf den entsprechend generierten Latentraum-Repräsentationen basierend können abschließend durch Dekodierung der Information der Latentraum-Repräsentationen in das Forma des Sensordaten die entsprechend durch die Latentraum-Repräsentationen dargestellten Sensordaten generiert werden. Auf diese Weise können klassifizierte Sensordaten generiert werden, die auf keinen tatsächlich durchgeführten Messungen der Sensoreinheiten basieren und die die jeweils vordefinierte Klassifikationen aufweisen. Die Sensordaten können somit maßgeschneidert mit der gewünschten Klassifikation generiert werden. Der Trainingsdatensatz kann somit über eine beliebige Anzahl von neu generierten Sensordaten erweitert werden und somit auf ein beliebiges Ausmaß vergrößert werden, ohne dass hierzu umständliche Messungen zum Erzeugen entsprechender aussagekräftiger Sensordaten benötigt werden würden.

Ferner kann der Trainingsdatensatz um die Sensordaten erweitert werden, die die gewünschte Klassifikation aufweisen, sprich den Wandtyp oder die Objektposition bzw. den Objekttyp abbilden, die in dem bestehenden Trainingsdatensatz unterrepräsentiert ist. Die Sensordaten können somit exakt auf die Bedürfnisse des Trainingsdatensatzes hin zugeschnitten generiert werden, um einen möglichst umfassenden und ausgeglichenen Trainingsdatensatz zu generieren, in dem eine möglichst große Anzahl verschiedener Wandtypen, Objektpositionen, Objekttypen repräsentiert sind.

Nach einer Ausführungsform umfasst das Klassifizieren ferner:
Labeln der Sensordaten des Trainingsdatensatzes entsprechend den Klassifikationen.

Hierdurch kann der technische Vorteil erreicht werden, dass durch das Klassifizieren der Sensordaten gleichzeitig gelabelte Sensordaten erzeugt werden können. Die gelabelten Sensordaten entsprechen hierbei ausgezeichneten Sensordaten, in denen die jeweilige Klassifikation durch ein entsprechendes Label ausgezeichnet ist. Hierdurch kann die Qualität des entsprechend generierten Trainingsdatensatzes weiter erhöht werden.

Nach einer Ausführungsform umfasst das Verfahren ferner:
Visualisieren der Sensordaten des Trainingsdatensatzes durch Visualisieren der entsprechenden Latentraum-Repräsentationen der jeweiligen Sensordaten durch ein Visualsierungsmodul.

Hierdurch kann der technische Vorteil erreicht werden, dass basierend auf den visualisierten Latentraum-Repräsentationen aufgrund der jeweiligen Anordnung und Beabstandung der Latentraum-Repräsentationen zueinander Zuordnung der durch die Latentraum-Repräsentationen dargestellten Objekte zu gemeinsamen Objektklassen und/oder Objektdomänen ermöglicht ist. Objektklassen sind hierbei Definitionen verschiedener Objekttypen. Objektdomänen sind Zusammenfassungen mehrerer Objektklassen.

Nach einer Ausführungsform ist der Abstand als ein euklidischer Abstand definiert.

Hierdurch kann der technische Vorteil erreicht werden, dass eine einfache Abstandsbestimmung möglich ist.

Nach einer Ausführungsform ist das Klassifikatormodul als eine entsprechend trainierte künstliche Intelligenz ausgebildet, die eingerichtet ist, basierend auf Sensordaten entsprechende Latentraum-Repräsentation zu generieren und/oder basierend auf Latentraum-Repräsentationen entsprechende Sensordaten zu generieren.

Hierdurch kann der technische Vorteil erreicht werden, dass ein leistungsfähiges und zuverlässiges Klassifikatormodul mit den genannten Merkmalen bereitgestellt werden kann.

Nach einer Ausführungsform ist das Klassifikatormodul als ein Generative Adversarial Network GAN, insbesondere als ein Autoencoder mit einem Encoder-Modul und einem Decoder-Modul, ausgebildet.

Hierdurch kann der technische Vorteil erreicht werden, dass ein leistungsfähiges und zuverlässiges Klassifikatormodul bereitgestellt werden kann.

Nach einer Ausführungsform umfassen die empfangenen Sensordaten gelabelte und/oder ungelabelte Sensordaten.

Hierdurch kann der technische Vorteil erreicht werden, dass das Verfahren sowohl auf schon gelabelten als auch auf bislang ungelabelten Sensordaten angewendet werden kann.

Nach einer Ausführungsform umfassen die Sensordaten Radardaten eines Radarsensors und/oder Daten eines Induktionssensors und/oder eines Wirbelstromsensors und/oder eines Kapazitätssensors und/oder eines Wechselstromsensors und/oder eines NMR-Sensors und/oder eines Ultraschallsensors.

Hierdurch kann der technische Vorteil erreicht werden, dass durch weitere Sensordaten zusätzlicher Sensoren, die jeweils eingerichtet sind, unterschiedliche physikalische Messgrößen zu detektieren, zusätzliche Information zuzüglich zu den Informationen der Radardaten der Radarsensoreinheit in die Wanddiagnose einfließen können. Diese zusätzlichen und zu den Informationen der Radardaten der Radarsensoreinheit vorzugsweise komplementären Information ermöglichen eine weitere Präzisierung der Wanddiagnose bzw. der Objekterkennung.

Nach einer Ausführungsform erfolgt die Klassifikation der Sensordaten ferner in Bezug auf eine Objekttiefe und/oder eine Objektausdehnung des Objekts. Hierdurch kann der technische Vorteil erreicht werden, dass zusätzliche Informationen bezüglich weiterer Merkmale der in den zu untersuchenden Wänden angeordneten Objekten im Trainingsdatensatz, im Training des Diagnosemoduls und damit in der Wanddiagnose des Diagnosemoduls berücksichtigt werden können.

Nach einer Ausführungsform umfassen Objektklassen des Objekttyps des Objekts: Metall-/Nichtmetallobjekt, Kabel für Niederspannung, Kabel mit einphasigem AC-Signal, Kabel mit mehrphasigem AC-Signal, Holzträger, Metallträger, Kunststoffrohr, wassergefülltes Kunststoffrohr, beispielsweise Frischwasserrohr, nicht-wassergefülltes Kunststoffrohr, beispielsweise Abwasserrohr, und/oder wobei die Wandtypklassen des Wandtyps der Wand: Betonwand, Leichtbau-/Trockenbauwand, gemauerte Wand und/oder von vermauerten Steinen der Wand, Fußbodenheizung, Wandheizung umfassen.

Hierdurch kann der technische Vorteil erreicht werden, dass eine große Anzahl verschiedener Objekte unterschiedlicher Objekttypen erkannt bzw. klassifiziert werden kann. Das Messgerät bzw. das Diagnosemodul kann hierbei darauf trainiert sein, übliche in Gebäudewänden verbaute Objekte zu detektieren und zu klassifizieren. Dies ermöglicht eine besonders präzise Wanddiagnose, in der die detektierten Objekte präzise und eindeutig den entsprechenden Objektklassen zugeordnet werden können.

Durch die präzise Objektklassifizierung und das Bereitstellen der entsprechenden Klassifizierungsinformation dem Nutzer über die Anzeigeeinheit ist eine möglichst aussagekräftige Wanddiagnose ermöglicht. In dem der Nutzer nicht nur weiß, dass und wo sich ein Objekt innerhalb der Wand befindet, sondern auch um welchen Objekttyp es sich bei dem detektierten Objekt handelt, kann der Nutzer entsprechend entscheiden, wie die weitere Bearbeitung der Wand in Bezug auf das detektierte Objekt auszuführen ist. Das Bereitstellen der Objekttypen der Objektklassifikation der detektierten Objekte stellt somit einen essentiellen Bereich der Wanddiagnose dar, da der Nutzer basierend auf dem angegebenen Objekttyp die geplante Bearbeitung der Wand entsprechend anpassen kann. Nach einem Aspekt wird ein Trainingsdatensatz für ein Training einer künstlichen Intelligenz eines Messgeräts zur Wanddiagnostik bereitgestellt, wobei der Trainingsdatensatz durch das Verfahren zum Erzeugen eines Trainingsdatensatzes zum Trainieren einer künstlichen Intelligenz zum Betreiben eines Messgeräts nach einer der voranstehenden Ausführungsformen erzeugt wurde.

Nach einem Aspekt wird eine Recheneinheit bereitgestellt, die eingerichtet ist, das Verfahren zum Erzeugen eines Trainingsdatensatzes zum Trainieren einer künstlichen Intelligenz zum Betreiben eines Messgeräts nach einer der voranstehenden Ausführungsformen und/oder das Verfahren zum Trainieren einer künstlichen Intelligenz eines Messgeräts auszuführen.

Nach einem Aspekt wird ein Computerprogrammprodukt umfassend Befehle bereitgestellt, die bei der Ausführung des Programms durch eine Datenverarbeitungseinheit diese veranlassen, das Verfahren zum Erzeugen eines Trainingsdatensatzes zum Trainieren einer künstlichen Intelligenz zum Betreiben eines Messgeräts nach einer der voranstehenden Ausführungsformen und/oder das Verfahren zum Trainieren einer künstlichen Intelligenz eines Messgeräts auszuführen.

Ausführungsformen der Erfindung sind mit Bezug auf die folgenden Fig. beschrieben. Die Fig. zeigen:
- Fig. 1: eine schematische Darstellung eines Messgeräts gemäß einer Ausführungsform;
- Fig. 2: eine weitere schematische Darstellung des Messgeräts gemäß einer weiteren Ausführungsform;
- Fig. 3: eine weitere schematische Darstellung des Messgeräts gemäß einer weiteren Ausführungsform;
- Fig. 4: eine schematische Darstellung einer Messung des Messgeräts gemäß einer Ausführungsform,
- Fig. 5: eine weitere schematische Darstellung des Messgeräts gemäß einer weiteren Ausführungsform;
- Fig. 6: eine schematische Darstellung eines Systems zum Erzeugen eines Trainingsdatensatzes gemäß einer Ausführungsform,
- Fig. 7: ein Flussdiagramm eines Verfahrens zum Erzeugen eines Trainingsdatensatzes gemäß einer Ausführungsform,
- Fig. 8: ein weiters Flussdiagramm des Verfahrens zum Erzeugen eines Trainingsdatensatzes gemäß einer weiteren Ausführungsform,
- Fig. 9: ein weiters Flussdiagramm des Verfahrens zum Erzeugen eines Trainingsdatensatzes gemäß einer weiteren Ausführungsform,
- Fig. 10: ein weiters Flussdiagramm des Verfahrens zum Erzeugen eines Trainingsdatensatzes gemäß einer weiteren Ausführungsform,
- Fig. 11: ein weiters Flussdiagramm des Verfahrens zum Erzeugen eines Trainingsdatensatzes gemäß einer weiteren Ausführungsform,
- Fig. 12: ein weiters Flussdiagramm des Verfahrens zum Erzeugen eines Trainingsdatensatzes gemäß einer weiteren Ausführungsform, und
- Fig. 13: eine schematische Darstellung eines Computerprogrammprodukts.

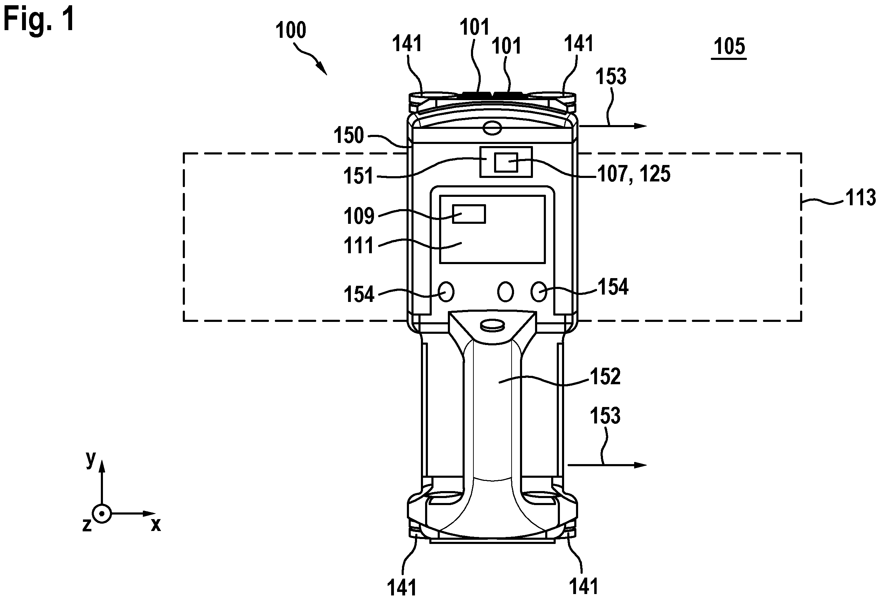

Fig. 1 zeigt eine schematische Darstellung eines Messgeräts 100 gemäß einer Ausführungsform.

Die vorliegende Erfindung betrifft ein Messgerät, insbesondere ein Wanddiagnosegerät für Untersuchungen von zu bearbeitenden Wänden 105. Im Stand der Technik sind Wanddiagnosegeräte bekannt, die dazu verwendet werden, in Wänden angeordnete Objekte zu detektieren. Derartige Geräte erlauben es einem Nutzer zu bearbeitende Wände nach in den Wänden angeordnete Objekte zu untersuchen, um hierauf basierend die geplanten Arbeiten, beispielsweise das Bohren in Wände, derart ausführen zu können, dass Beschädigungen der in den Wänden angeordnete Objekte vermieden werden können.

In der gezeigten Ausführungsform umfasst das Messgerät 100 ein Gehäuse 150 mit einem Griff 152 zum Greifen des Messgeräts 100 durch einen Nutzer, einer Anzeigeeinheit 111 zum Anzeigen von Diagnoseergebnissen 109 der Wanddiagnose und Bedienelemente 154 zum Schalten des Messgeräts 100 in verschiedene Betriebsmodi ausgebildet.

Erfindungsgemäß umfasst das Messgerät 100 wenigstens eine Radarsensoreinheit 101. Mittels der Radarsensoreinheit 101 können Radarsignal in Richtung der zu untersuchenden Wand 105 ausgesendet und von der Wand 105 reflektierte Radarsignale empfangen werden.

Die Radarsensoreinheit 101 kann beispielsweise als ein schmalbandiges Radardetektorgerät im Frequenzbereich 2,4 GHz bis 2,4835 GHz oder als ein ultrabreitbandiges Radardetektorgerät im Frequenzbereich 1,8 GHz bis 5, 8 GHz ausgebildet sein.

Das Messgerät 100 umfasst zur Ausführung der Wanddiagnose ferner ein Diagnosemodul 107, das auf einer Recheneinheit 151 des Messgeräts 100 ausführbar ist. Das Diagnosemodul 107 ist eingerichtet, basierend auf den Radardaten 103 der Radarsensoreinheit 101 eine entsprechende Diagnose der zu untersuchenden Wand auszuführen. Die Radardaten 103 der Radarsensoreinheit 101 bilden hierbei die zu untersuchende Wand 105 und gegebenenfalls innerhalb der Wand 105 angeordnete Objekte 113 ab.

Die durch das Diagnosemodul 107 ausgeführte Wanddiagnose umfasst hierbei wenigstens das Ausführen einer Objekterkennung. Die Objekterkennung umfasst hierbei eine Objektdetektion und eine Objektklassifikation des in der Wand 105 angeordneten Objekts 113. Die Objektdetektion umfasst hierbei wenigstens die Bestimmung einer Objektposition 115. Die Objektposition beschreibt hierbei die Positionierung des in der Wand 105 angeordneten Objekts in Bezug auf ein durch das Messgerät 100 festgelegtes Bezugssystem. Die Objektklassifikation des detektierten Objekts 113 umfasst wenigstens die Bestimmung eines Objekttyps 117 des detektierten Objekts 113.

Die derart bestimmten Diagnoseergebnisse der Wanddiagnose, sprich wenigstens die bestimmte Objektposition 115 und/oder der bestimmte Objekttyp 117 des in der Wand 105 angeordneten Objekts 113, werden darauffolgend in einer Anzeigeeinheit 111 des Messgeräts 100 einem Nutzer des Messgeräts 100 dargestellt. Die Anzeigeeinheit 111 kann beispielsweise als ein entsprechendes Display ausgebildet sein und die Diagnoseergebnisse 109 können visuell angezeigt werden. Zusätzlich kann die Anzeige der Diagnoseergebnisse 109 über akustische und/oder haptische Signale unterstützt werden. Die haptischen Signale können beispielsweise über entsprechende Vibrationssignale realisiert sein.

Das Objekt 113 kann hierbei beispielsweise durch ein entsprechendes Symbol im Display angezeigt werden. Das Objekt 113 kann hierbei in der entsprechenden Objektposition 115 in dem Display angezeigt werden. Die Objektausdehnung 121 kann durch eine entsprechende Größe des angezeigten Symbols visualisiert sein. Der jeweilige Objekttyp 117 des Objekts 113 kann mit einem entsprechenden Begriff oder einer farblichen Unterlegung des Symbols oder durch eine spezielle Form des das Objekt 113 repräsentierenden Symbols visualisiert werden.

Alternativ kann die Wanddiagnose zusätzlich die Bestimmung eines Wandtyps 123 in Form einer Wandtypenklassifikation der zu untersuchenden Wand 105 umfassen. Der Wandtyp 123 beschreibt hierbei den jeweiligen Typ der zu untersuchenden Wand 105. Der Wandtyp kann beispielsweise entsprechenden Wandtypklassen zugeordnet werden, die umfassen können: Betonwand, Leichtbau- /Trockenbauwand, gemauerte Wand und/oder von vermauerten Steinen der Wand, Fußbodenheizung, Wandheizung oder ähnlichen Gebäuden vorzufinden Wandtypen.

Gemäß einer Ausführungsform ist das Diagnosemodul 107 ferner eingerichtet, basierend auf den Radardaten 103 einer Objekttiefe 119 des Objekts 113 innerhalb der Wand 105 zu bestimmen. Die Objekttiefe 119 ist hierbei durch einen Abstand des in der Wand 105 ausgebildeten Objekts zu einer Oberfläche der Wand 105 definiert. Der Abstand kann auf der Objektseite beispielsweise in Bezug auf eine Objektoberfläche oder in Bezug auf einen Objektmittelpunkt definiert sein. Der Abstand zur Oberfläche der Wand 105 beschreibt hierbei einen kürzesten Abstand, der durch einen zur Oberfläche der Wand 105 senkrecht Richtung definiert ist.

Gemäß einer Ausführungsform ist das Diagnosemodul 107 ferner eingerichtet, basierend auf den Radardaten 103 eine Objektausdehnung 121 des Objekts 113 in wenigstens einer vordefinierten Richtung zu bestimmen. Die Objektausdehnung 121 des Objekts 113 beschreibt hierbei eine räumliche Ausdehnung des Objekts 113 in wenigstens einer Raumrichtung, vorzugsweise in zwei Raumrichtungen, besonders bevorzugt in drei Raumrichtungen. Das Objekt 113 kann hierdurch als ein eindimensionales, zweidimensionales oder dreidimensionales Objekt 113 beschrieben werden.

In der üblichen Verwendung wird das Messgerät 100 an der Wandoberfläche der zu untersuchenden Wand 105 platziert. Über die Radarsensoreinheit 101 werden Radarsignale in Richtung der Wand 105 ausgesendet und von der Wand 105 bzw. den danach angeordneten Objekten 113 reflektierte Radarsignale empfangen. Auf diesen Radardaten 103 der Radarsensoreinheit 101 wird durch das Diagnosemodul 107 die oben beschriebene Wanddiagnose ausgeführt und es werden entsprechende Diagnoseergebnisse 109 ermittelt.

Die Diagnoseergebnisse 109 können beispielsweise die Objektposition 115 und/oder den Objekttyp 117 des in der Wand 105 angeordneten Objekts 113 umfassen. Alternativ oder zusätzlich können die Diagnoseergebnisse 109 den Wandtyp 123 der Wand 105 und/oder die Objekttiefe 119 und/oder die Objektausdehnung 121 des Objekts 113 umfassen.

Die derart ausgestalteten Diagnoseergebnisse 109 können darauffolgend einen Nutzer des Messgeräts 100 in einer Anzeigeeinheit 111 des Messgeräts 100 angezeigt werden. Die Anzeigeeinheit 111 kann beispielsweise als ein entsprechendes Display ausgebildet sein. Die Diagnoseergebnisse 109 können in der Anzeigeeinheit 111 in graphischer Form oder in Textform angezeigt sein.

Gemäß einer Ausführungsform umfasst das Messgerät 100 ferner eine Bewegungserfassungseinheit 141. Mit der Bewegungserfassungseinheit 141 kann eine Bewegung des Messgeräts 100 relativ zur Wand 105 erfasst werden. Die Bewegungserfassungseinheit 141 kann hierzu beispielsweise wenigstens ein Rollenelement aufweisen. Bei Auflage des Rollenelements auf der Wandoberfläche der Wand 105 kann bei Bewegung des Messgeräts 100 entlang einer Bewegungsrichtung 153 durch Abrollen des Rollenelements die Bewegung des Messgeräts 100 relativ zur Wand 105 erfasst werden. Alternativ hierzu kann die Bewegungserfassungseinheit 141 eine andere Ausgestaltung aufweisen, mittels der eine relative Bewegung des Messgeräts 100 relativ zur Wand 105 erfassbar ist.

Durch die Bewegung des Messgeräts 100 relativ zur Wand 105 können Radardaten 103 der Radarsensoreinheit 101 für eine Mehrzahl verschiedener Positionierungen des Messgeräts 100 relativ zur Wand 105 aufgenommen werden. Dies ermöglicht eine Untersuchung der Wand 105 in einem größeren Raumbereich, als dies durch den Wirkbereich der Radarsensoreinheit 101 gegeben ist. Dies ermöglicht das Erfassen von Objekten 113, die eine größere räumliche Ausdehnung aufweisen, als der Wirkbereich der Radarsensoreinheit 101.

Während der Bewegung des Messgeräts 100 entlang der Bewegungseinrichtung 153 können durchgehend Radardaten 103 der Radarsensoreinheit 101 aufgenommen werden. Die Wanddiagnose kann basierend auf diesen Radardaten 103 während des Bewegens des Messgeräts 100 entlang der Bewegungsrichtung 153 durch das Diagnosemodul 107 ausgewertet werden. Dies ermöglicht eine beschleunigte Wanddiagnose, die ihre Positionierung des Messgeräts 100 relativ zur Wand 105 berücksichtigt.

Gemäß seiner Ausführungsform ist das Diagnosemodul 107 als eine entsprechende trainierte künstliche Intelligenz 125 ausgebildet. Die künstliche Intelligenz 125 ist hierbei wenigstens darauf trainiert, basierend auf den Radardaten 103 der Radarsensoreinheit 101 die oben beschriebene Wanddiagnose auszuführen und wenigstens die Objektposition 115 und den Objekttyp 117 eines in der Wand 105 angeordneten Objekts 113 zu bestimmen. Die Objektklassifizierung bzw. das Bestimmen des Objekttyps 117 umfasst hierbei das Zuordnen des detektierten Objekts 113 in vordefinierte Objektklassen.

Die Objektklassen können hierbei umfassen: Metall- /Nichtmetallobjekt Kabel für Niederspannung, Kabel mit einphasigem AC-Signal, Kabel mit mehrphasigen AC-Signa, Holzträger, Metallträger, Kunststoffrohr, wassergefülltes Kunststoffrohr, beispielsweise Frischwasserrohr, nicht wassergefülltes Kunststoffrohr, beispielsweise Abwasserrohr oder andere in Gebäudewänden übliche verbaute Elemente.

Ferner kann die künstliche Intelligenz 125 darauf trainiert sein, wenigstens auf den Radardaten 103 der Radarsensoreinheit 101 den Wandtyp 123 der zu untersuchenden Wand 105 zu bestimmen. Mögliche Wandtypen 123 können hierbei umfassen: Betonwand, Leichtbau- /Trockenbauwand, gemauerte Wand und/oder einzelne Steine der gemauerten Wand, Fußbodenheizung, Wandheizung oder andere übliche in Gebäuden verbaute Wandtypen.

Gemäß einer Ausführungsform kann das Messgerät 100 neben der Radarsensoreinheit 101 weitere zusätzliche Sensoren umfassen, mittels denen zusätzliche physikalische Größen detektierbar sind. Beispielsweise kann das Messgerät 100 einen Induktionssensor und/oder einen Wirbelstromsensor und/oder Kapazitätssensor und/oder einen Wechselstromsensor und/oder einen NMR-Sensor und/oder einen Ultraschallsensor oder andere in Wanddiagnosegeräten üblich verbaute Sensoren umfassen.

Das Diagnosemodul 107, insbesondere die entsprechende trainierte künstliche Intelligenz 125, kann hierbei darauf eingerichtet sein, basierend auf den Radardaten 103 der Radarsensoreinheit 101 und unter Berücksichtigung der zusätzlichen Sensorinformationen der weiteren Sensoren die oben beschrieben Wanddiagnose auszuführen. Die zusätzlichen Informationen der zusätzlichen oben genannten Sensoren können hierzu insbesondere zur Objekterkennung der in den Wänden 105 angeordneten Objekte 113 verwendet werden. Über die zusätzlichen Sensorinformationen kann gegebenenfalls eine verbesserte Detektion der Objekte 113 und gegebenenfalls eine verbesserte Klassifikation der Objekte 113 erreicht werden.

Insbesondere kann beispielsweise das Material der Objekte 113, beispielsweise als metallisches oder nichtmetallisches Material, durch die Verwendung der zusätzlichen Sensorinformation verbessert und klassifiziert werden.

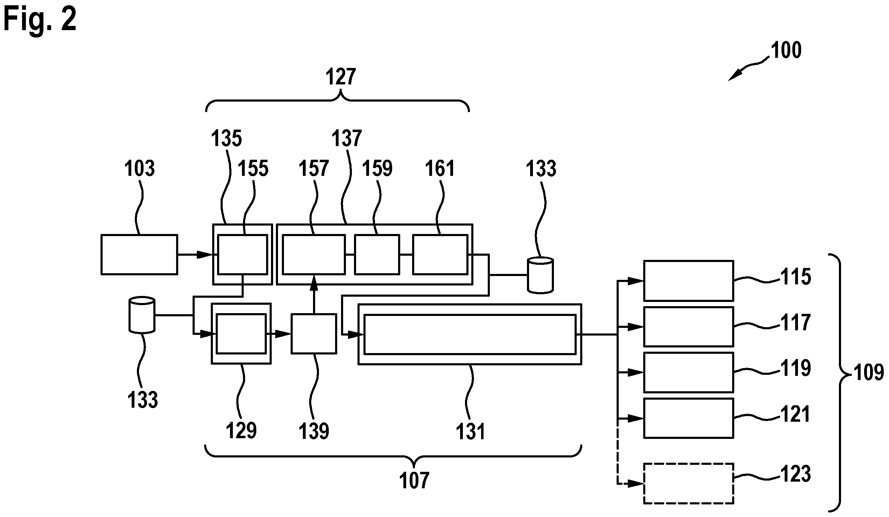

Fig. 2 zeigt eine weitere schematische Darstellung des Messgeräts 100 gemäß einer weiteren Ausführungsform.

In der gezeigten Ausführungsform umfasst das Messgerät 100 neben dem Diagnosemodul 107 ein Vorverarbeitungsmodul 127. Zur Wanddiagnose empfängt das Messgerät 100 zunächst die Radardaten 103 der Radarsensoreinheit 101. Über das Vorverarbeitungsmoduls 127 wird eine Vorverarbeitung der empfangenden Radardaten 103 ausgeführt. Über die Vorverarbeitung des Vorverarbeitungsmoduls 127 können die Radardaten beispielsweise in eine entsprechende für die Wanddiagnose durch das Diagnosemodul 107 benötigte Datenstruktur gebracht werden.

Wie oben beschrieben wird durch das Diagnosemodul 107 während der Wanddiagnose die oben beschriebenen Diagnoseergebnisse 109 erstellt. Die Diagnoseergebnisse 109 können hierbei beispielsweise die Objektposition 115 und/oder den Objekttyp 117 und/oder die Objekttiefe 119 und/oder die Objektausdehnung 121 eines in der zu untersuchenden Wand 105 ausgebildeten Objekts 113 und/oder den Wandtyp 123 der zu untersuchenden Wand 105 umfassen. Die entsprechend generierten Diagnoseergebnisse 109 können darauffolgend in der Anzeigeeinheit 111 des Messgeräts 100 angezeigt werden.

Gemäß einer Ausführungsform können zusätzlich zu den Radardaten 103 der Radarsensoreinheit 101 die oben beschriebenen zusätzlichen Sensorinformationen der zusätzlichen Sensoren in der Wanddiagnose des Diagnosemoduls 107 berücksichtigt werden. Eine entsprechende Vorverarbeitung der zusätzlichen Sensorinformationen durch das Vorverarbeitungsmodul 127 kann entsprechend ausgeführt werden.

In der gezeigten Ausführungsform umfasst das Diagnosemodul 107 ein Wandtypklassifizierungsmodul 129 und ein Objekterkennungsmodul 131. Das Vorverarbeitungsmodul 127 umfasst ein erstes Vorverarbeitungsmodul 135 und ein zweites Vorverarbeitungsmodul 137. Das erste Vorverarbeitungsmodul 135 umfasst eine S-Matrix Reduktion 155. Das zweite Vorverarbeitungsmodul 137 umfasst eine Hintergrundkorrektur 157, eine inverse Fast Fourier Transformation 159 und eine Fokussierung und Migration 161. In der Vorverarbeitung der Radardaten 103 durch das Vorverarbeitungsmodul 127 erfolgt zunächst eine Vorverarbeitung der Radardaten 103 durch das erste Vorverarbeitungsmodul 135 und die darin enthaltene S-Matrix Reduktion 155.

Das ersten Vorverarbeitungsmodul 135 erzeugt hierbei basierend auf den Radardaten 103 Eingabedaten 133. Die Eingabedaten 133 dienen als Eingabedaten für das Wandtypklassifizierungsmodul 129. Das Wandtypklassifizierungsmodul 129 führt hierbei basierend auf den Eingabedaten 133 eine Wandtypenklassifizierung der zu untersuchenden Wand 105 aus und generiert eine Wandtypinformation 139. In der Wandtypinformation 139 ist der in der Wandtypenklassifizierung bestimmte Wandtyp 123 der zu untersuchenden Wand 105 enthalten.

Darauffolgend wird das zweite Vorverarbeitungsmodul 137 basierend auf den Radardaten 103 und der Wandtypinformation 139 eine Vorverarbeitung ausgeführt. Hierbei wird unter Berücksichtigung des in der Wandtypinformation 139 ermittelten Wandtyps 123 eine Hintergrundkorrektur 157 der Radardaten 103 ausgeführt. Je nach Wandtyp 123 der zu untersuchenden Wand 105 können unterschiedliche Effekte auf die Radardaten 103 auftreten.

Durch die Hintergrundkorrektur 157 können diese Effekte, die primär auf dem jeweiligen Wandtyp 123 basieren und eine Objekterkennung beeinflussen können, korrigiert werden. Nach ausgeführter Hintergrundkorrektur kann durch Ausführung der inversen Fast Fourier Transformation 159 bzw. der Fokussierung und Migration 161 eine weitere Vorverarbeitung ausgeführt werden und erneute Eingabedaten 133 für das Objekterkennungsmodul 131 erstellt werden. Basierend auf den durch das zweite Vorverarbeitungsmodul 137 bereit gestellten Eingabedaten 133 führt das Objekterkennungsmodul 133 die Objekterkennung des in der zu untersuchenden Wand 105 angeordneten Objekts 113 aus und bestimmt wenigstens die Objektposition 115 und den Objekttyp 117 des jeweiligen Objekts 113. Zusätzlich kann durch das Objekterkennungsmodul 131 die Objekttiefe 119 und die Objektausdehnung 121 bestimmt werden.

Nach einer Ausführungsform ist das Diagnosemodul ferner eingerichtet, basierend auf den Radardaten eine Objekttiefe des Objekts innerhalb der Wand zu bestimmen, wobei die Objekttiefe durch einen Abstand des in der Wand ausgebildeten Objekts zu einer Oberfläche der Wand definiert ist.

Die Vorverarbeitung ist hierbei optional. In Abhängigkeit des für das Diagnosemodul 107 verwendeten Algorithmus können komplett unverarbeitete Radarechos verschiedener Frequenzen als Radardaten 103 und als Eingabedaten für das Diagnosemodul 107 genutzt werden. Alternativ können über mehrere Schritte verarbeitete Radardaten 103 vorverwendet werden. Die Vorverarbeitungsschritte umfassen hierbei beispielsweise die Transformation der Signale vom Frequenzraum in den Zeit- oder Distanzraum, Hintergrundabzug, Entrauschung und Normalisierung der Signale. Bei Radardaten 103, die in Form von komplexen Zahlen vorliegen, kann ausschließlich der Absolutwert verarbeitet werden. Alternativ oder zusätzlich können die Phaseninformation berücksichtigt werden.

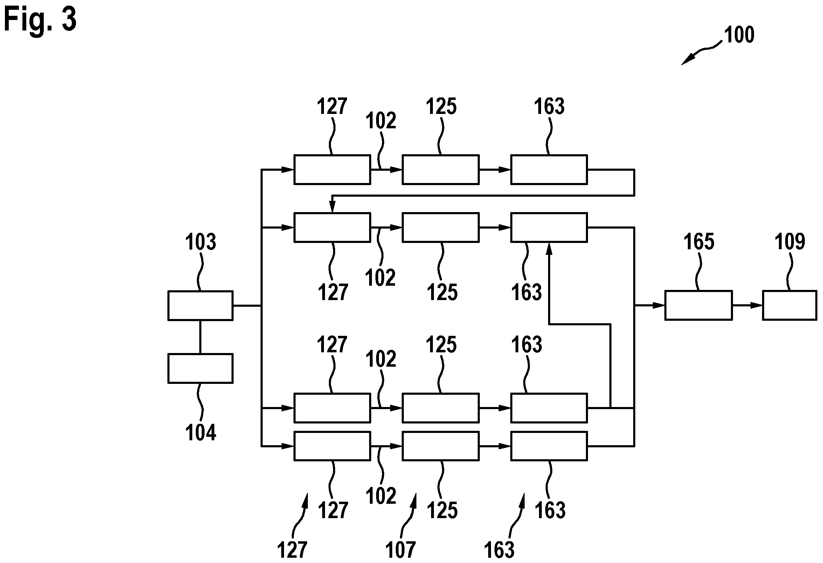

Fig. 3 zeigt eine weitere schematische Darstellung des Messgeräts 100 gemäß einer weiteren Ausführungsform.

In der gezeigten Ausführungsform umfasst das Diagnosemodul 107 eine Mehrzahl von parallel verlaufenden Verarbeitungspfaden 102. In jedem Verarbeitungspfad 102 ist ein Vorverarbeitungsmodul 127, das Diagnosemodul 107, beispielsweise umfassend das Wandtypklassifizierungsmodul 129 und/oder das Objekterkennungsmodul 131 gemäß der Ausführungsform in Fig, 2, und ein Nachverarbeitungsmodul 163.

In Fig. 3 werden primär die Radardaten 103 als Eingabedaten für die Wanddiagnose dargestellt. Zuzüglich zu den gezeigten Radardaten können jedoch auch die Zusatzinformationen der zusätzlichen Sensoren als Eingabedaten für die Wanddiagnose dienen. Hierbei können die unterschiedlichen Informationen der verschiedenen Sensortypen in den verschiedenen parallelen Verarbeitungspfaden 102 verarbeitet werden und die entsprechende Wanddiagnose getrennt auf den unterschiedlichen Sensorinformationen ausgeführt werden. Nach Abschluss der Wanddiagnose kann über ein Zusammenfassungsmodul eine Zusammenfassung der einzelnen Teilanalyseergebnisse zu den Diagnoseergebnissen 109 der Wanddiagnose zusammengefügt werden.

Alternativ oder zusätzlich können durch die verschiedenen Verarbeitungspfade 102 auch basierend auf den gleichen Sensorinformationen unterschiedliche Teilaspekte der Wanddiagnose durchgeführt werden.

Die einzelnen Verarbeitungspfade 102 können hierbei beispielsweise unterschiedliche Radardaten 103 verarbeiten, die während des Bewegens des Messgeräts 100 relativ zur Wand 105 für verschiedene Positionen des Messgeräts 100 relativ zur Wand 105 aufgenommen wurden. Die Radardaten 103, die somit unterschiedliche Bereiche der Wand 105 abbilden und zeitlich nacheinander während des Bewegens des Messgeräts 100 relativ zur Wand 105 aufgenommen wurde, können dann in den verschiedenen Verarbeitungspfaden 102 durch die gezeigten Module verarbeitet werden.

Die verschiedenen Verarbeitungspfade führen hierbei eine eigenständige Wanddiagnose durch, die wenigstens das Bestimmen der Objektposition 115 und/oder des Objekttyps 117 des in der Wand 105 angeordneten Objekts 113 umfassen.

Durch das Zusammenfassungsmodul 165 können die in den einzelnen Verarbeitungspfaden 102 bereitgestellten Teilergebnisse der eigenständigen Wanddiagnosen der unterschiedlichen Bereiche der Wand 105 einem zusammenhängenden Diagnoseergebnis 109 zusammengefasst werden. Das zusammenhängende Diagnoseergebnis beschreibt hierbei die Wanddiagnose eines zusammenhängenden Raumbereichs, der während des Bewegens des Messgeräts 100 relativ zur Wand 105 überstrichen und durch die entsprechenden aufgenommenen Radardaten 103 abgebildet wurde. Die parallele Verarbeitung der Radardaten 103 bzw. der zusätzlichen Sensorinformationen 104 der zusätzlichen Sensorelemente in den verschiedenen Verarbeitungspfaden 102 ermöglicht somit eine beschleunigte Wanddiagnose.

Alternativ hierzu können in den unterschiedlichen Verarbeitungspfaden 102 auch verschiedene Funktionen der Wanddiagnose ausgeführt werden. So kann beispielsweise in einem Verarbeitungspfad 102 die Wandtypenklassifizierung und das Bestimmen des Wandtypen 123 der zu untersuchenden Wand 105 ausgeführt werden. In einem weiteren Verarbeitungspfad 102 kann die Objekterkennung des in der Wand angeordneten Objekts 113 ausgeführt werden. Hierbei können die Objektdetektion mit der Bestimmung der Objektposition 115 und die Objektklassifikation mit der Bestimmung des Objekttypens 113 in einem Verarbeitungspfad 102 ausgeführt werden.

Alternativ hierzu kann dann auch die Objektdetektion und die Objektklassifikation in zwei getrennten Verarbeitungspfaden 102 ausgeführt werden. In weiteren Verarbeitungssträngen 102 können jeweils die Objekttiefenbestimmung, sprich die Bestimmung der Objekttiefe 119, und/oder die Bestimmung der Objektausdehnung 121 bewirkt werden. In dem Zusammenfassungsmodul 165 können die verschiedenen Teilergebnisse der Wanddiagnose in entsprechende Diagnoseergebnisse 109 zusammengefasst werden.

Das Diagnosemodul 107 kann hierbei in unterschiedliche künstliche Intelligenzen 125 aufgeteilt sein, wie dies bereits in der Ausführungsform in Fig. 2 dargestellt ist. Das Diagnosemodul 107 kann hierbei beispielsweise ein Wandtypenklassifizierungsmodul 129 und ein Objekterkennungsmodul 131 umfassen. Das Objekterkennungsmodul kann wiederum in ein Objektdetektionsmodul und ein Objektklassifikationsmodul aufteilt sein. Das Diagnosemodul 107 kann ferner ein Objekttiefenbestimmungsmodul und Objektausdehnungsmodul umfassen, die jeweils eingerichtet sind, die Objekttiefe 119 und die Objektausdehnung 121 zu bestimmen.

Die entsprechenden Module können jeweils als eigenständige künstliche Intelligenzen 125, beispielsweise neuronale Netze, ausgebildet sein. Alternativ können die verschiedenen Module Teile eines gesamten künstlichen neuronalen Netzes bilden, die gemäß aus dem Stand der Technik bekannten Strukturen zu einem gesamten neuronalen Netz verbunden sind.

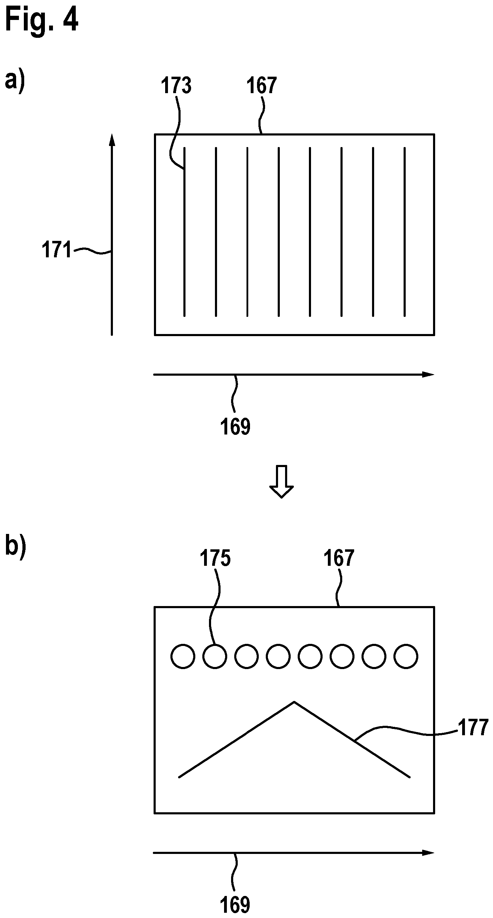

Fig. 4 zeigt eine schematische Darstellung einer Messung des Messgeräts 100 gemäß einer Ausführungsform.

Zur Vorverarbeitung können die Radardaten 103 bzw. die zusätzlichen Sensorinformationen 104 der übrigen Sensoren insbesondere zur numerischen Stabilisierung der nachfolgenden durch das Diagnosemodul 107 während der Wanddiagnose ausgeführten Schritte normalisiert werden. Hierzu können beispielsweise eine Amplitude und/oder Off-set-Kompensation ausgeführt werden. Ferner können zur Reduktion von Störelementen Filterung der Radardaten 103 und zur Reduktion der Datenrate die entsprechenden Sensordaten herabgetastet werden. Ferner können die Radardaten 103 bzw. die zusätzlichen Sensorinformationen 104 in den jeweilig benötigten Frequenzbereich bzw. Zeitbereich transformiert werden. Hierzu können aus dem Stand der Technik bekannte Verfahren angewendet werden.

Ferner können die aufgenommenen Radardaten 103 bzw. zusätzlichen Sensorinformationen 104 in zeitliche oder räumliche Fenster 167 aufgeteilt werden. Zeitliche Fenster 167 können hierbei durch das Aufnehmen der Radardaten 103 bzw. der zusätzlichen Sensorinformationen bzw. der vorverarbeiteten Radardaten 103 über ein festes Zeitintervall generiert werden. Räumliche Fenster 167 können hingegen aus einer Zuordnung der Radardaten 103 bzw. zusätzlichen Sensorinformationen 104 zu Positionen des Messgeräts 100 relativ zur Wand 105 entlang der Bewegungsrichtung 153 generiert werden.

Grafik a) der Fig. 4 zeigt eine derartige aus den oben beschriebenen Schritten ergebende Datenmatrix. Die in Grafik a) gezeigte Datenmatrix des Fensters 167 zeigt eine Mehrzahl von Sensordaten, die beispielsweise Radardaten 103 oder zusätzlichen Sensorinformationen 104 der weiteren Sensoren umfassen können, die entlang einer Frequenzkanalachse 171 bzw. entlang einer Raum-/Zeitachse 169 aufgetragen sind.

Eine Breite der zeitlichen Fenster 167 kann hierbei derart gewählt werden, dass unterschiedliche Abtastraten der Sensoren ausgeglichen werden können und häufig genug ein neues Fenster 167 bereitgestellt werden kann, sodass eine Anzeige der Diagnoseergebnisse 109 der Wanddiagnose in der Anzeigeeinheit 111 ohne eine zu große zeitliche Verzögerung während der durchgeführten Messung oder kurz nach Beendigung der Messung des Messgeräts 100 erfolgen kann.

Hierzu kann eine Rate von 2 bis 20 Fenster pro Sekunde der Datenaufnahme der Sensordaten vorteilhaft sein. Für räumliche Fenster können die räumlichen Abtastraten derart gewählt werden, dass die gewünschte örtliche Genauigkeit erreicht werden kann. Vorteilhaft können hierbei 1 mm bis 1 cm Abtastraten sein. Dies bedeutet, dass alle 1 mm bis 1 cm einer Bewegung des Messgeräts 100 entlang der Bewegungsrichtung 153 entsprechende Sensordaten aufgenommen werden.

Eine Breite der räumlichen Fenster 167 kann derart gewählt werden, dass zusammenhängende Informationen zu einem Objekt 113 in einem Fenster enthalten sind. Vorteilhaft kann hierbei eine Breite von 1 cm bis 20 cm der jeweiligen räumlichen Fenster 167 sein. Hieraus ergeben sich 4 bis 100 Messwerte pro Fenster 167. Dies ermöglicht eine weitere effiziente algorithmische Verarbeitung der entsprechend aufgenommenen Radardaten 103 bzw. zusätzlichen Sensorinformationen durch das Diagnosemodul 107.

Ein weiteres zeitliches Fenster 167 bzw. räumliches Fenster 167 kann hierbei bereitgestellt werden, sobald einer oder mehrere Abtastpunkte zur Verfügung stehen.

Das Diagnosemodul 107 kann derart ausgerichtet sein, dass als Eingabedaten, beispielsweise auch eines jeden Verarbeitungspfad 102 der Ausführungsform in Fig. 3, eine der Fenstergröße des jeweiligen räumlichen oder zeitlichen Fensters 167 entsprechende Matrix als Eingabedaten aufzunehmen. Die entsprechenden Eingabedaten können hierbei gemäß der Ausführungsform der Fig. 2 die jeweils vorverarbeiteten Sensordaten, sprich Radardaten 103 und zusätzliche Sensorinformationen 104 der zusätzlichen Sensoren, umfassen.

Wie oben ausgeführt, kann die Wanddiagnose durch das Diagnosemodul 107 basierend auf einer entsprechend trainierten künstlichen Intelligenz ausgeführt werden. Alternativ können auch verschiedene Verarbeitungspfade durch Regelbasierte Algorithmen berechnet werden. Auch ist innerhalb eines Verarbeitungspfads 102 eine Kombination aus künstlicher Intelligenz und regelbasiertem Algorithmus in Form einer Parallelschaltung oder Verkettung möglich.

Die Diagnoseergebnisse 109 der Wanddiagnose können als Zahlenwerte, Vektoren oder Matrizen ausgeprägt sein. Ferner kann für die Objektdetektion die Wahrscheinlichkeit einer Detektion, bzw. für die Wandtypenklassifikation bzw. die Objektklassifikation eine Wahrscheinlichkeit der angegebenen Objektklassen bzw. Wandtypenklassen angegeben sein. Gleiches kann für die Positions- und/oder Tiefenbestimmung gelten, für die ebenfalls entsprechende Wahrscheinlichkeitswerte angegeben werden können.

Werden neben den Radardaten 103 die zusätzlichen Sensorinformationen der weiteren Sensortypen in einem Verarbeitungspfad 102 verarbeitet, so können diese entweder innerhalb der künstlichen Intelligenz 125 zusammengeführt oder durch regelbasierte Kombinationen kombiniert werden.

In der Nachverarbeitung jedes Verarbeitungspfads 102, der Ausführungsform in Fig. 3, können mehrere Algorithmusergebnisse, die auf mehreren Fenstern 167 basieren, durch das Zusammenfassungsmodul 165 zusammengefasst werden. Diese Zusammenfassung kann insbesondere durch Mehrheitsbildung, Summenbildung oder auch Multiplikation aufeinanderfolgender Wahrscheinlichkeitswerte realisiert werden.

Ferner kann durch Clustern von mehreren Ergebnissen, beispielsweise von mehreren nahe beieinander liegend detektierten Objekten, erkannt werden, bei welchen Objekten es sich um dasselbe Objekt handelt, sodass diese nicht fälschlicherweise mehrfach erkannt werden.

Ebenso ist es möglich, bei der Zusammenfassung der Ergebnisse aus mehreren Fenstern 167 multiplikativ eine Gewichtungsfunktion 177 anzuwenden. Vorteilhafterweise können hierbei die Diagnoseteilergebnisse 175, die entsprechenden Datenpunkten im Raum entsprechen, mit Bezug auf eine Positionierung der Diagnoseteilergebnisse 175 relativ zu einem Mittelpunkt des jeweiligen Fensters 167 gewichtet werden. Diese ist beispielhaft in der Grafik b) dargestellt, in der die einzelnen Diagnoseteilergebnisse 175 gemäß der gezeigten Gewichtungsfunktion 177 mit Bezug auf den Mittelpunkt des gezeigten Fensters 167 gewichtet sind.

Gemäß einer Ausführungsform können die Ergebnisse eines Verarbeitungspfads 102 nach der Nachverarbeitung 163 auf die Erweiterung eines anderen Verarbeitungspfad 102s Einfluss nehmen. Hierbei können Gewichtungsparameter angepasst werden, die für jedes Fenster von dem jeweiligen Ergebnis aus dem Verarbeitungspfad 102 abhängen können.

Beispielsweise kann das Ergebnis einer Objektklassifikation, in der der Objekttyp 117 eines in der Wand 105 angeordneten Objekts definiert ist, genutzt werden, um das Gewicht einer Wandtypenklassifikation, in der der Wandtyp 123 der jeweiligen Wand 105 bestimmt wird, in der Nachverarbeitung an Stellen ohne Objekte 113 zu erhöhen, da die jeweiligen Radardaten 103 an diesen Stellen weniger durch Reflektionen der Objekte 113 beeinflusst sind.

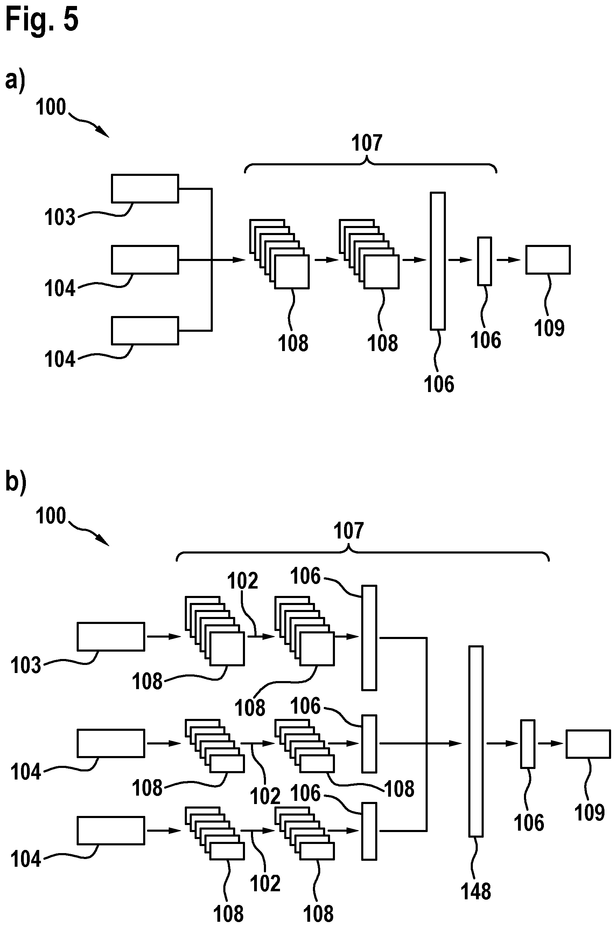

Fig. 5 zeigt eine weitere schematische Darstellung des Messgeräts 100 gemäß einer weiteren Ausführungsform.

Die Grafiken a) und b) der Fig. 5 zeigen zwei verschiedene Alternativen einer gemeinsamen Datenverarbeitung von Radardaten 103 und zusätzlichen Sensorinformationen 104 durch das Diagnosemodul 107.

In Grafik b) wird eine gemeinsame Verarbeitung der Radardaten 103 und der zusätzlichen Sensorinformationen 104 der zusätzlichen Sensoren durch das Diagnosemodul 107 dargestellt. Hierzu werden die Radardaten 103 und die zusätzlichen Sensorinformationen 104 gemeinsam als Eingabedaten des als künstliche Intelligenz, insbesondere als künstliches neuronales Netz, ausgebildet Diagnosemoduls 107 verwendet. Das Diagnosemodul 107 umfasst hier mehrere Faltungsschichten 108 und mehrere dichte Schichten 106. Über die Faltungsschichten 108 und die dichten Schichten 106 werden die Radardaten 103 und die zusätzlichen Sensorinformationen 104 gemeinsam als Eingabedaten verarbeitet. Als Ausgabedaten des Diagnosemoduls 107 werden hierauf basierend die oben bereits erwähnten Diagnoseergebnisse 109 erstellt.

In Grafik b) werden die Radardaten 103 und die zusätzlichen Sensorinformationen 104 hingegen als eigenständige Eingabedaten des Diagnosemoduls 107 verwendet. Das Diagnosemodul 107 wird zu mehrere Verarbeitungspfade 102. Die Verarbeitungspfade 102 umfassen jeweils mehrere Faltungsschichten 108 und wenigstens eine dichte Schicht 106. In den verschiedenen Verarbeitungspfaden 102 wird basierend auf den Radardaten 103 bzw. den zusätzlichen Sensorinformationen 104 getrennt voneinander jeweils eine Wanddiagnose durch das Diagnosemodul 107 erstellt.

In einer zusätzlichen Verkettungsschicht 148 werden die Teilergebnisse der Teildiagnosen der verschiedenen Verarbeitungspfade 102 zusammengefügt und einer letzten dichten Schicht 106 zugeführt. Die Ausgabedaten des Diagnosemoduls 107 entsprechen den oben beschriebenen Diagnoseergebnissen 109.

Das entsprechend ausgebildete Diagnosemodul 107 ist eingerichtet, basierend auf den Radardaten 103 und den zusätzlichen Sensorinformationen 104 eine wie oben beschriebene Wanddiagnose mit den oben beschriebenen Merkmalen auszuführen.

In der gezeigten Ausführungsform ist das Diagnosemodul 107 als ein künstliches neuronales Netz, insbesondere als ein Faltungsnetzwerk, ausgebildet. Entsprechende Netzwerkarchitekturen mit Faltungsschichten 108, dichten Schichten 106 und Verkettungsschichten 148 sind aus dem Stand der Technik bekannt.

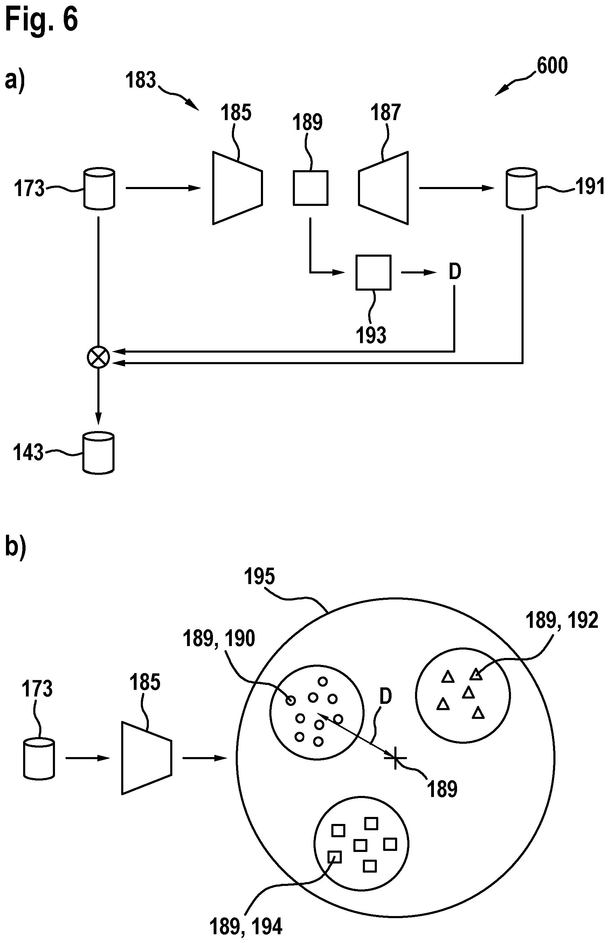

Fig. 6 zeigt eine schematische Darstellung eines Systems 600 zum Erzeugen eines Trainingsdatensatzes 143 gemäß einer Ausführungsform.

In Graphik a) der Fig. 6 ist ein System 600 zum Erzeugen eines Trainingsdatensatzes 143 dargestellt. Das System 600 umfasst wenigstens ein Klassifikatormodul 183. Das Klassifikatormodul 183 ist eingerichtet, basierend auf Sensordaten 173 der wenigstens einen Sensoreinheit 101 eines Messgeräts 100, insbesondere eines Wanddiagnosegeräts, einen Trainingsdatensatz 143 zu generieren. Die Sensordaten 173 bilden hierbei die zu diagnostizierende Wand 105 und die in der Wand 105 angeordneten Objekte 113 ab.

Die Sensordaten 173 können auf Messungen der Sensoreinheit 101 wenigstens eines Messgeräts 100 oder einer Mehrzahl verschiedener Messgeräte 100 basieren. Die Messungen können hierbei von einer Mehrzahl verschiedener Wände 105 mit einer Mehrzahl verschiedener Objekte 113 ausgeführt sein. Die Messungen können beispielsweise speziell zum Generieren eines Trainingsdatensatzes 143 ausgeführt worden sein. Alternativ oder zusätzlich können die Messungen, bzw. die entsprechend aufgenommenen Sensordaten 173, von im Betrieb befindlichen Messgeräten 100 einer Mehrzahl verschiedener Nutzer/Nutzerinnen stammen.

Erfindungsgemäß ist das Klassifikatormodul eingerichtet, die Sensordaten 173 bezüglich wenigstens eines Klassifizierungsmerkmals zu klassifizieren und hierauf basierend klassifizierte Sensordaten 173 zu generieren. Die Klassifizierungsmerkmale können hierbei den Wandtyp 123 der durch die Sensordaten 173 abgebildeten Wand 105 und/oder die Objektposition 115 bzw. den Objekttyp 113 eines in der abgebildeten Wand 105 angeordneten Objekts 113 umfassen.

Erfindungsgemäß ist das Klassifikatormodul 183 eingerichtet, basierend auf den empfangenen Sensordaten 173 Latentraum-Repräsentationen 189 eines Latentraums 195 zu generieren. Die Latentraum-Repräsentationen stellen hierbei dimensionsreduzierte Darstellungen der Sensordaten 173 dar. Die Latentraum-Repräsentationen 189 sind üblicherweise als Vektordarstellungen ausgebildet.

Hierzu kann das Klassifikatormodul 183 als eine entsprechend trainierte künstliche Intelligenz eingerichtet sein, die ausgebildet ist, basierend auf Sensordaten 173 entsprechende Latentraum-Repräsentationen 189 zu generieren.

In der gezeigten Ausführungsform umfasst das Klassifikatormodul 183 als ein Auto-Encoder mit einem Encoder-Modul 185 und einem Decoder-Modul 187. Der Auto-Encoder kann hierbei gemäß den aus dem Stand der Technik bekannten Auto-Encoder-Modulen ausgebildet und trainiert sein.

In der gezeigten Ausführungsform weist das System 600 ferner ein Abstandsermittlungsmodul 193 auf. Das Abstandsermittlungsmodul 193 ist hierbei eingerichtet, Abstände D im Latentraum 195 zwischen verschiedenen Latentraum-Repräsentationen 189 zu berechnen.

Gemäß einer Ausführungsform ist das Abstandsermittlungsmodul 193 ein Teil des Klassifikatormoduls 183.

Graphik b) zeigt eine schematische Darstellung der Erzeugung der Latentraum-Repräsentationen 189 basierend auf den Sensordaten 173 durch das Encoder-Modul 185 des Klassifikatormoduls 183.

In der genanngten Graphik sind die Latentraum-Repräsentationen 190, 192, 194 des Latentraums 195 in eine Gruppe von ersten Latentraum-Repräsentationen 190, eine Gruppe von zweiten Latentraum-Repräsentationen 192 und eine Gruppe von dritten Latentraum-Repräsentationen 194 zusammengefasst. Die ersten Latentraum-Repräsentationen 190 weisen jeweils Abstände untereinander auf, die geringer sind als ein vordefinierter Grenzwert. Die zweiten Latentraum-Repräsentationen 192 weisen entsprechend Abstände untereinander auf, die ebenfalls geringer als ein vordefinierter Grenzwert sind. Gleiches gilt für die Latentraum-Repräsentationen 194, die wiederum zueinander beabstandet sind mit geringeren Abständen als der vordefinierte Grenzwert.

Die derart gruppierten ersten, zweiten und dritten Latentraum-Repräsentationen 190, 192, 194 beschreiben jeweils Sensordaten 173 mit drei verschiedenen Klassifizierungen, wobei die ersten Latentraum-Repräsentationen 190 eine erste Klassifikation, die zweiten Latentraum-Repräsentationen 192 eine zweite Klassifikation und die dritten Latentraum-Repräsentationen 194 eine dritte Klassifikation bezüglich eines gemeinsamen Klassifizierungsmerkmals oder bezüglich einer Mehrzahl verschiedener Klassifizierungsmerkmale.

Ferner zeigt die Graphik b) eine Latentraum-Repräsentation 189, die jeweils Abstände D zu den ersten Latentraum-Repräsentationen 190, den zweiten Latentraum-Repräsentationen 192 und den dritten Latentraum-Repräsentationen 194 aufweist, die größer sind als der vordefinierte Grenzwert. In Grafik b) ist dies dadurch dargestellt, dass die Latentraum-Repräsentation 189 außerhalb der die Gruppen der ersten bis dritten Latentraum-Repräsentationen 190, 192, 194 umgebenden Umrandungen angeordnet ist.

Die Latentraum-Repräsentation 189 ist somit in dem gezeigten Beispiel kein Teil der drei Gruppierungen der ersten bis dritten Latentraum-Repräsentationen 190, 192, 194 und weist somit keine der Klassifikationen der ersten bis dritten Latentraum-Repräsentationen 190, 192, 194 auf.

Wäre die Latentraum-Repräsentation 189 hingegen innerhalb einer der Gruppen der ersten bis dritten Latentraum-Repräsentationen 190, 192, 194 angeordnet, so hätte die Latentraum-Repräsentation 189 die jeweilige Klassifikation der jeweiligen Gruppe. Der Abstand D der Latentraum-Repräsentation 189 zu den Latentraum-Repräsentation 190, 192, 194 der jeweiligen Gruppe wäre dann kleiner oder gleich dem vorbestimmten Grenzwert.

Grafik b) stellt nur ein Beispiel dar. In Realität können viele derartige Gruppen von gleich klassifizierten Latentraum-Repräsentationen 190, 192, 194 im Latentraum bestehen.

Erfindungsgemäß ist das System 600 über das Klassifikatormodul 183 eingerichtet, basierend auf den durch das Abstandsermittlungsmodul 193 ermittelten Abständen D zwischen den Latentraum-Repräsentationen 189 die Sensordaten 173 zu klassifizieren. Hierbei werden Sensordaten 173 klassifiziert, falls Abstände der jeweils die Sensordaten repräsentierenden Latentraum-Repräsentationen 189 zu Latentraum-Repräsentationen 190, 192, 194 von bereits klassifizierten Sensordaten 173 kleiner oder gleich einem vordefinierten Grenzwert sind.

Die Sensordaten 173 werden hierbei basierend auf den Abständen D der jeweils repräsentierenden Latentraum-Repräsentationen 189 zu bereits klassifizierten Sensordaten repräsentierenden Latentraum-Repräsentationen 190, 192, 194 durch ein Klassifizierungsmodul, in Fig. 1 nicht dargestellt, in Bezug auf Klassifizierungsmerkmale klassifiziert.

Das Klassifizieren bedeutet hierbei, dass die jeweils zu klassifizierenden Sensordaten 173 gemäß den ermittelten Abständen D zwischen den Latentraum-Repräsentationen 189, 190, 192, 194 den jeweiligen Objektklassen der klassifizierten Sensordaten 173 zugeordnet werden. Das Klassifizieren der Sensordaten 173 erfolgt hierbei wenigstens in Bezug auf den Wandtyp 123 der zu untersuchenden Wand 105 und/oder die Objektposition 115 und/oder den Objekttyp 117 des in der Wand 105 angeordneten Objekts 113.

Alternativ oder zusätzlich können hierzu Klassifizierungen in Bezug auf die Objekttiefe 119 und/oder Objektausdehnung 121 des Objekts 113 bewirkt werden.

Die empfangenen Sensordaten 173 können hierbei gelabelte oder ungelabelte Senordaten 173 umfassen. Die Sensordaten 173 können hierbei Radardaten 103 und/oder zusätzliche Sensorinformationen 104 zusätzlicher Sensoren umfassen.

Der zwischen den Latentraum-Repräsentationen 189, 190, 192, 194 durch das Abstandsermittlungsmodul 193 ermittelte Abstand D kann beispielsweise als ein euklidischer Abstand definiert sein. Alternativ oder zusätzlich können die Abstände gemäß anderer bekannter Abstandsmetriken definiert sein.

Erfindungsgemäß ist das System 600 bzw. das Klassifikatormodul 183 ferner eingerichtet, die entsprechend klassifizierten Sensordaten 173 in dem Trainingsdatensatz 143 zusammenzufassen.

Darüber hinaus ist das System 600 bzw. das Klassifikatormodul 183 eingerichtet, Sensordaten 173 aus dem Trainingsdatensatz 143 zu entfernen bzw. für diesen nicht zu berücksichtigen, sprich nicht in den Trainingsdatensatz 143 zu integrieren, falls die durch das Abstandsermittlungsmodul 193 ermittelten Abstände D der jeweiligen die Sensordaten 173 repräsentierenden Latentraum-Repräsentationen 189 zu Latentraum-Repräsentationen 190, 192, 194 von bereits klassifizierten Sensordaten 173 größer als ein vordefinierter zweiter Grenzwert ist. Ein derartiger Fall ist in Grafik b) dargestellt.

Sind die entsprechenden Sensordaten 173 repräsentierenden Latentraum-Repräsentationen somit zu weit von den bereits klassifizierten Sensordaten 173 repräsentierenden Latentraum-Repräsentationen 190, 192, 194 entfernt, so werden die entsprechenden Sensordaten 173 als nicht für den Trainingsdatensatz 143 geeignet eingestuft und somit nicht im Trainingsdatensatz 143 berücksichtigt.

Hierdurch können fehlerhafte Sensordaten 173, die über die Abstandsbestimmung der jeweiligen Latentraum-Repräsentationen 189 nicht gemäß dem vordefinierten Objekt klassifiziert werden können, aus dem Trainingsdatensatz 143 entfernt oder für diesen unberücksichtigt bleiben, um hierüber einen homogenen Trainingsdatensatz 143 erzeugen zu können.

Gemäß einer Ausführungsform ist das Klassifikatormodul 183 ferner eingerichtet, über das Decoder-Modul 178 generierte Sensordaten 191 zu generieren. Hierzu werden zunächst Latentraum-Repräsentationen 189 erzeugt. Die Latentraum-Repräsentationen 189, die wie oben beschrieben, als Vektordarstellungen ausgebildet sind, werden hierbei derart erzeugt, dass diese gemäß der graphischen Darstellung in Graphik b) den bereits bekannten Gruppierungen von Latentraum-Repräsentationen 190, 192, 194 der bereits klassifizierten Sensordaten 173 zugeordnet sind. Die Vektordarstellungen werden hierbei derart generiert, dass die Abstände D zu den Vektordarstellungen der ersten bis dritten Latentraum-Repräsentationen 190, 192, 194 geringer oder gleich dem vorbestimmten Grenzwert sind.

Durch Ausführung des entsprechend trainierten Decoder-Moduls 187 auf die derart erzeugten Latentraum-Repräsentationen 189 können entsprechende generierte Sensordaten 191 generiert werden. Die entsprechend erzeugten Latentraum-Repräsentationen 189 stellen hierbei Repräsentationen der generierten Sensordaten 191 dar. Die entsprechend generierten Sensordaten 191 sind hierbei automatisch bezüglich der Klassifikationsmerkmale klassifiziert, da die zuvor erzeugten Latentraum-Repräsentationen 189 derart erzeugt wurden, dass im Latentraum 195 die Abstände D der jeweiligen erzeugten Latentraum-Repräsentationen 189 zu den Latentraum-Repräsentationen 190, 192, 194 der bereits klassifizierten Sensordaten 173 kleiner oder gleich dem vordefinierten Grenzwert sind. Die entsprechend generierten Sensordaten 191 werden darauffolgend in dem Trainingsdatensatz 143 integriert.

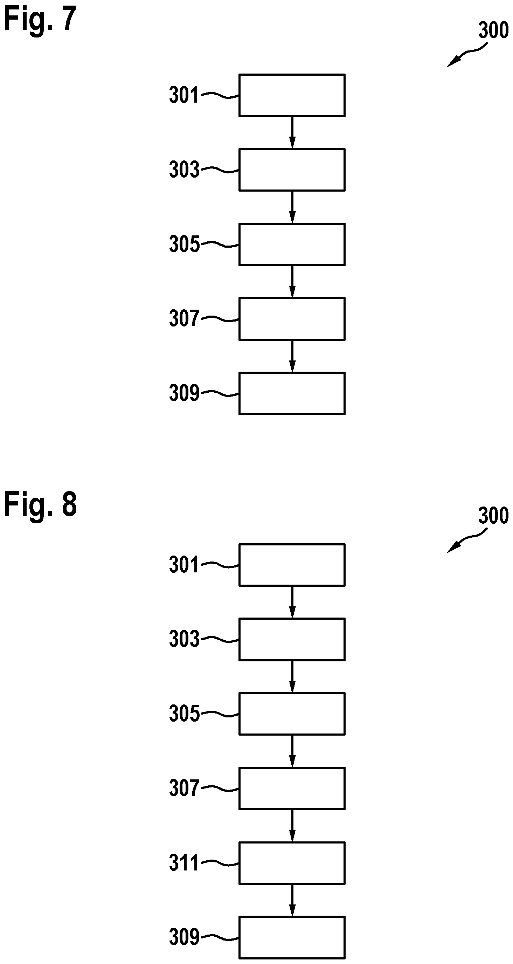

Fig. 7 zeigt ein Flussdiagramm eines Verfahrens 300 zum Erzeugen eines Trainingsdatensatzes 143 gemäß einer Ausführungsform.

Zum Erzeugen eines Trainingsdatensatzes 143 werden durch das Klassifikatormodul 183 in einem ersten Verfahrensschritt 301 zunächst Sensordaten 173 der wenigstens einen Sensoreinheit 101 des Messgeräts 100 empfangen. Die Sensordaten 173 bilden hierbei die zu diagnostizierende Wand 105 mit dem Wandtyp 123 und die in der Wand 105 an den Objektpositionen 115 angeordneten Objekte 113 der Objekttypen 117 ab.

Die Sensordaten 173 können hierbei gelabelte und/oder ungelabelte Sensordaten 173 umfassen.

In einem weiteren Verfahrensschritt 303 werden durch das Klassifikatormodul 183 basierend auf den Sensordaten 173 die Latentraum-Repräsentationen 189 generiert.

In einem weiteren Verfahrensschritt 305 werden durch das Abstandsermittlungsmodul 193 im Latentraum 195 die Abstände D zwischen den Latentraum-Repräsentationen 189 ermittelt. Die Abstände D können als euklidische Abstände definiert sein.

In einem weiteren Verfahrensschritt 307 werden darauffolgend basierend auf den Abständen D der Latentraum-Repräsentationen 189 die Sensordaten 173 durch das Klassifizierungsmodul klassifiziert. Die Klassifizierung erfolgt hierbei in Bezug auf den Wandtyp 123 der Wand 105 und/oder die Objektposition 115 und/oder den Objekttyp 117 des Objekts 113. Die Klassifizierung erfolgt hierbei derart, dass die Latentraum-Repräsentationen 189 der zu klassifizierenden Sensordaten 173 den gemeinsamen Klassen der Latentraum-Repräsentationen 190, 192, 194 der bereits klassifizierten Sensordaten 173 zugeordnet werden, falls die Abstände D der Latentraum-Repräsentationen 189 der zu klassifizierenden Sensordaten 173 zu den Latentraum-Repräsentationen 190, 192, 194 der bereits klassifizierten Sensordaten kleiner oder gleich einem vordefinierten Grenzwert sind.

In einem weiteren Verfahrensschritt 309 werden die derart über die Abstandsbestimmung zwischen den Latentraum-Repräsentationen 189, 190, 192, 194 klassifizierten Sensordaten 173 in dem Trainingsdatensatz 143 zusammengefasst.

Fig. 8 zeigt ein weiters Flussdiagramm des Verfahrens 300 zum Erzeugen eines Trainingsdatensatzes 143 gemäß einer weiteren Ausführungsform.

Die Ausführungsform in Fig. 8 basiert auf der Ausführungsform in Fig. 7 und umfasst alle dort beschriebenen Merkmale.

In der gezeigten Ausführungsform werden nach der Klassifizierung bzw. der Abstandbestimmung der Abstände D zwischen den Latentraum-Repräsentationen 189, 190, 192, 194 in einem Verfahrensschritt 311 Sensordaten 173 aus dem Trainingsdatensatz 143 entfernt bzw. Sensordaten 173 für den Trainingsdatensatz 143 nicht berücksichtigt, falls die Abstände D der jeweiligen Latentraum-Repräsentationen 189 zu den Latentraum-Repräsentationen 190, 192, 194 der bereits klassifizierten Sensordaten 173 des Trainingsdatensatzes 143 im Latentraum 195 größer oder gleich einem vordefinierten zweiten Grenzwert sind.

Die ersten und zweiten Grenzwerte können hierbei durch den Experimentator je nach Güte der Sensordaten 173 frei gewählt werden.

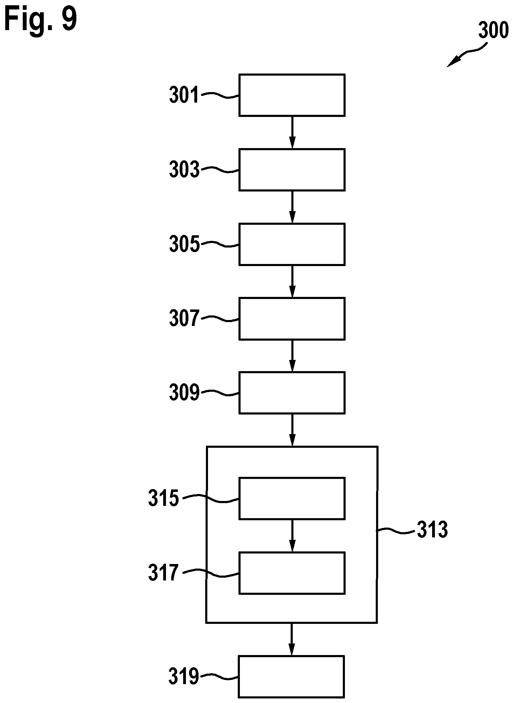

Fig. 9 zeigt ein weiters Flussdiagramm des Verfahrens 300 zum Erzeugen eines Trainingsdatensatzes 143 gemäß einer weiteren Ausführungsform.

Die in Fig. 9 gezeigte Ausführungsform basiert auf der Ausführungsform in Fig. 7 und umfasst alle dort beschriebenen Merkmale.

In der gezeigten Ausführungsform werden durch das Klassifikatormodul 183 in einem Verfahrensschritt 313 generierte Sensordaten 191 für den Trainingsdatensatz 143 generiert.

Hierzu werden in einem Verfahrensschritt 315 Latentraum-Repräsentationen 189 mit vordefinierten Abständen D zu vorausgewählten Latentraum-Repräsentationen 190, 192, 194 im Latentraum 195 durch das Klassifikatormodul 183 generiert. Die vorausgewählten Latentraum-Repräsentationen 190, 192, 194 stellen hierbei bereits klassifizierte Sensordaten 173 mit vorausgewählten Klassifikationen dar.

In einem weiteren Verfahrensschritt 317 werden durch das Klassifikatormodul 183 basierend auf den im Verfahrensschritt 315 generierten Latentraum-Repräsentationen 189 entsprechende generierte Sensordaten 191 generiert.

In einem weiteren Verfahrensschritt 319 werden die derart generierten Sensordaten 191 zum Trainingsdatensatz 143 hinzugefügt.

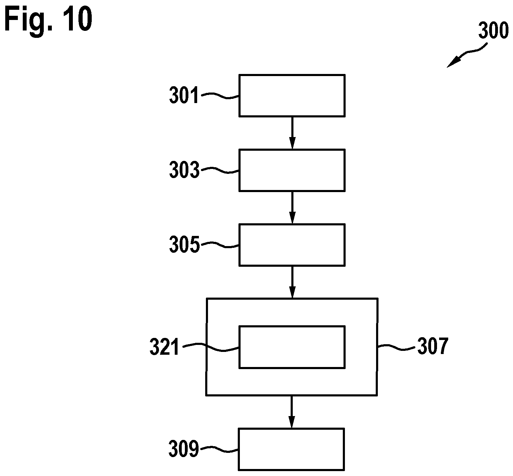

Fig. 10 zeigt ein weiters Flussdiagramm des Verfahrens 300 zum Erzeugen eines Trainingsdatensatzes 143 gemäß einer weiteren Ausführungsform.

Die in Fig. 10 gezeigte Ausführungsform basiert auf der Ausführungsform in Fig. 7 und umfasst alle dort beschriebenen Merkmale.

In der gezeigten Ausführungsform werden zum Klassifizieren der Sensordaten im Verfahrensschritt 307 die Sensordaten 173 in einem Verfahrensschritt 321 gelabelt. Die Label sind hierbei Kennzeichnungen der jeweiligen Sensordaten, die eine Kennzeichnung der entsprechenden Klassifikation der Sensordaten 173 anzeigen.

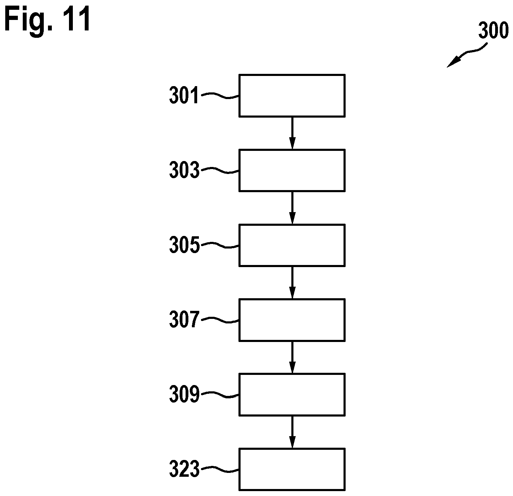

Fig. 11 zeigt ein weiters Flussdiagramm des Verfahrens 300 zum Erzeugen eines Trainingsdatensatzes 143 gemäß einer weiteren Ausführungsform.

Die in Fig. 11 gezeigte Ausführungsform basiert auf der Ausführungsform in Fig. 7 und umfasst alle dort beschriebenen Merkmale.

In der gezeigten Ausführungsform werden die Sensordaten 173 des Trainingsdatensatz 143 in einem Verfahrensschritt 323 visualisiert. Die Visualisierung der Sensordaten 173 erfolgt hierbei durch die Visualisierung der entsprechend die Sensordaten 173 repräsentierenden Latentraum-Repräsentationen 189, 190, 192, 194 bewirkt. Die Visualisierung erfolgt durch ein entsprechend eingerichtetes Visualisierungsmodul.

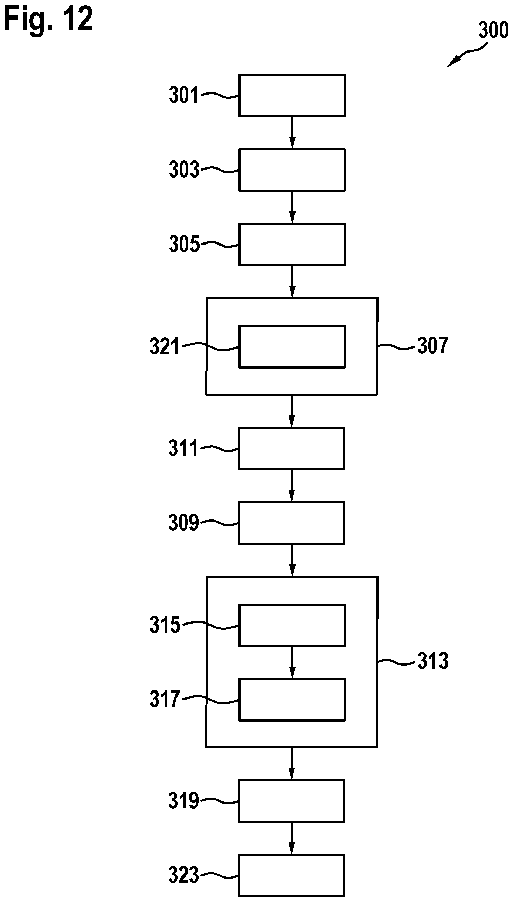

Fig. 12 zeigt ein weiters Flussdiagramm des Verfahrens 300 zum Erzeugen eines Trainingsdatensatzes 143 gemäß einer weiteren Ausführungsform.

Die in Fig. 12 gezeigte Ausführungsform basiert auf einer Kombination der Ausführungsformen der Fig. 7 bis 11 und umfasst alle dort beschriebenen Merkmale.

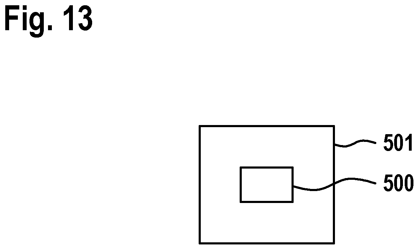

Fig. 13 zeigt eine schematische Darstellung eines Computerprogrammprodukts 500, umfassend Befehle, die bei der Ausführung des Programms durch eine Datenverarbeitungseinheit diese veranlassen, das Verfahren 300 zum Erzeugen eines Trainingsdatensatzes 143 auszuführen.

Das Computerprogrammprodukt 500 ist in der gezeigten Ausführungsform auf einem Speichermedium 501 gespeichert. Das Speichermedium 501 kann hierbei ein beliebiges aus dem Stand der Technik bekanntes Speichermedium sein.

## Patentansprüche

1. Computerimplementiertes Verfahren (300) zum Erzeugen eines Trainingsdatensatzes (143) für ein Training einer künstlichen Intelligenz (125) zum Betreiben eines Messgeräts (100), insbesondere eines Wanddiagnosegeräts, umfassend:
Empfangen (301) von Sensordaten (173) wenigstens einer Sensoreinheit (101) eines Messgeräts (100) durch ein Klassifikatormodul (183), wobei die Sensordaten (173) eine zu diagnostizierende Wand (105) mit einem Wandtyp (123) abbilden, und wobei in der Wand (105) in einer Objektposition (115) ein Objekt (113) eines Objekttyps (117) angeordnet ist;
Generieren (303) von Latentraum-Repräsentationen (189) der Sensordaten (173) in einem Latentraum (195) durch das Klassifikatormodul (183), wobei die Latentraum-Repräsentationen (189) der Sensordaten (173) als dimensionsreduzierte Darstellungen der Sensordaten (173) ausgebildet sind;
Ermitteln (305) von Abständen (D) zwischen den Latentraum-Repräsentationen (189) im Latentraum (195) durch ein Abstandsermittlungsmodul (193);
Klassifizieren (307) der Sensordaten in Bezug auf den Wandtyp (123) der Wand (105) und/oder die Objektposition (115) und/oder den Objekttyp (117) des Objekts (113) basierend auf den Abständen (D) der Latentraum-Repräsentationen (189) der Sensordaten (173) im Latentraum (195) durch ein Klassifizierungsmodul, wobei die Sensordaten (173) einer gemeinsamen Klasse zugeordnet klassifiziert werden, falls die Abstände der jeweiligen Latentraum-Repräsentationen (189) im Latentraum (195) zueinander kleiner oder gleich einem vordefinierten Grenzwert sind; und
Zusammenfassen (309) der klassifizierten Sensordaten (173) in einem Trainingsdatensatz (143).

2. Verfahren (300) nach Anspruch 1, ferner umfassend:
Entfernern (311) oder Nichtberücksichtigen von Sensordaten (173) aus dem oder für den Trainingsdatensatz (143), falls die Abstände (D) der jeweiligen Latentraum-Repräsentationen (189) zu den Latentraum-Repräsentationen (189) der weiteren Sensordaten (173) des Trainingsdatensatzes (143) im Latentraum (195) größer oder gleich einem vordefinierten zweiten Grenzwert sind.

3. Verfahren (300) nach Anspruch 1 oder 2, ferner umfassend:
Generieren (313) von generierten Sensordaten (191) für den Trainingsdatensatz (143) durch das Klassifikatormodul (183), wobei das Generieren (313) umfasst:
Generieren (315) von Latentraum-Repräsentationen (189) mit vordefinierten Abständen (D) zu vorausgewählten Latentraum-Repräsentationen (189) im Latentraum (195) durch das Klassifikatormodul (183), wobei die vorausgewählten Latentraum-Repräsentationen (189) Sensordaten (173) einer vorausgewählten Klassifikation darstellen; und
Generieren (317) der durch die generierten Latentraum-Repräsentationen (189) dargestellten Sensordaten (191) durch das Klassifikatormodul (183), wobei die generierten Sensordaten (191) die vorausgewählte Klassifikation aufweisen; und
Hinzufügen (319) der generierten Sensordaten (191) zum Trainingsdatensatz (143).

4. Verfahren (300) nach einem der voranstehenden Ansprüche, wobei das Klassifizieren (307) ferner umfasst:
Labeln (321) der Sensordaten (173) des Trainingsdatensatzes (143) entsprechend den Klassifikationen.

5. Verfahren (300) nach einem der voranstehenden Ansprüche, ferner umfassend:
Visualisieren (323) der Sensordaten (173) des Trainingsdatensatzes (143) durch Visualisieren der entsprechenden Latentraum-Repräsentationen (189) der jeweiligen Sensordaten (173) durch ein Visualsierungsmodul.

6. Verfahren (300) nach einem der voranstehenden Ansprüche, wobei der Abstand (D) als ein euklidischer Abstand definiert ist.

7. Verfahren (300) nach einem der voranstehenden Ansprüche, wobei das Klassifikatormodul (183) als eine entsprechend trainierte künstliche Intelligenz ausgebildet ist, die eingerichtet ist, basierend auf Sensordaten (173) entsprechende Latentraum-Repräsentation zu generieren und/oder basierend auf Latentraum-Repräsentationen (189) entsprechende Sensordaten (173) zu generieren.

8. Verfahren (300) nach Anspruch 7, wobei das Klassifikatormodul (183) als ein Generative Adversarial Network GAN, insbesondere als ein Autoencoder mit einem Encoder-Modul (185) und einem Decoder-Modul (187), ausgebildet ist.

9. Verfahren (300) nach einem der voranstehenden Ansprüche, wobei die empfangenen Sensordaten (173) gelabelte und/oder ungelabelte Sensordaten (173) umfassen.

10. Verfahren (300) nach einem der voranstehenden Ansprüche, wobei die Sensordaten (173) Radardaten (103) eines Radarsensors und/oder Daten eines Induktionssensors und/oder eines Wirbelstromsensors und/oder eines Kapazitätssensors und/oder eines Wechselstromsensors und/oder eines NMR-Sensors und/oder eines Ultraschallsensors umfassen.

11. Verfahren (300) nach einem der voranstehenden Ansprüche, wobei die Klassifikation der Sensordaten (173) ferner in Bezug auf eine Objekttiefe (119) und/oder eine Objektausdehnung (121) des Objekts (113) erfolgt.

12. Verfahren (300) nach einem der voranstehenden Ansprüche, wobei Objektklassen des Objekttyps (117) des Objekts (113) umfassen: Metall-/Nichtmetallobjekt, Kabel für Niederspannung, Kabel mit einphasigem AC-Signal, Kabel mit mehrphasigem AC-Signal, Holzträger, Metallträger, Kunststoffrohr, wassergefülltes Kunststoffrohr, beispielsweise Frischwasserrohr, nicht-wassergefülltes Kunststoffrohr, beispielsweise Abwasserrohr, und/oder wobei die Wandtypklassen des Wandtyps (123) der Wand (105) umfassen: Betonwand, Leichtbau-/Trockenbauwand, gemauerte Wand und/oder von vermauerten Steinen der Wand, Fußbodenheizung, Wandheizung.

13. Trainingsdatensatz (143) für ein Training einer künstlichen Intelligenz (125) eines Messgeräts (100) zur Wanddiagnostik, wobei der Trainingsdatensatz (143) nach dem Verfahren (300) zum Erzeugen eines Trainingsdatensatzes (143) nach einem der voranstehenden Ansprüche 1 bis 12 erzeugt wurde.

14. Recheneinheit (151), die eingerichtet ist, das Verfahren (300) zum Erzeugen eines Trainingsdatensatzes (143) für ein Training einer künstlichen Intelligenz (125) zum Betreiben eines Messgeräts (100) nach einem der voranstehenden Ansprüche 1 bis 12 auszuführen.

15. Computerprogrammprodukt (500) umfassend Befehle, die bei der Ausführung des Programms durch eine Datenverarbeitungseinheit diese veranlassen, das Verfahren (300) zum Erzeugen eines Trainingsdatensatzes (143) für ein Training einer künstlichen Intelligenz (125) zum Betreiben eines Messgeräts (100) nach einem der voranstehenden Ansprüche 1 bis 12 auszuführen.
